# NEUE EUROPÄISCHE PATENTSCHRIFT

(11) **EP 2 993 090 B2**
(45) Veröffentlichungstag und Bekanntmachung des Hinweises auf die Entscheidung über den Einspruch: **12.08.2020**
(45) Hinweis auf die Patenterteilung: 24.05.2017
(21) Anmeldenummer: 15176434.7
(22) Anmeldetag: 13.07.2015
(51) Int. Cl.: B60R 25/021

(54) **LENKRADVERRIEGELUNG**
STEERING WHEEL LOCKING SYSTEM
VERROUILLAGE DE VOLANT DE DIRECTION

(30) Priorität: 05.09.2014 DE 102014112816
(43) Veröffentlichungstag der Anmeldung: 09.03.2016
(73) Patentinhaber: Huf Hülsbeck & Fürst GmbH & Co. KG, 42551 Velbert (DE)
(72) Erfinder: Hanke, Michael, 82049 Pullach (DE)
(74) Vertreter: Patentanwälte Bals & Vogel

(56) Entgegenhaltungen:
- EP-A1- 0 071 803
- EP-A1- 1 069 010
- EP-A1- 2 090 478
- EP-A1- 2 275 313
- EP-A1- 2 277 749
- EP-A2- 2 420 416
- WO-A1-83/00465
- WO-A1-2006/000537
- DE-A1-102008 031 217
- DE-A1-102008 031 217
- DE-B4-102005 030 727
- FR-A1- 2 964 350
- FR-A1- 2 984 823
- GB-A- 2 459 042
- JP-A- H11 310 104
- JP-A- 2004 314 965
- JP-B2- 3 831 391
- JP-B2- 4 881 843
- US-A1- 2002 023 468
- US-A1- 2004 074 266
- US-A1- 2004 075 232
- US-A1- 2004 148 983
- US-A1- 2005 183 476
- US-A1- 2009 064 739
- US-A1- 2009 266 122
- US-A1- 2010 064 742

## Beschreibung

Die vorliegende Erfindung betrifft eine Lenkradverriegelung zur Verriegelung einer Lenkwelle eines Kraftfahrzeugs gemäß dem Oberbegriff des Anspruches 1 mit einem Sperrbolzen, der zwischen einer Verriegelungsposition, in welcher der Sperrbolzen die Lenkwelle blockiert, und einer Entriegelungsposition, in welcher der Sperrbolzen die Lenkwelle freigibt, bewegbar ausgebildet ist, und einem Schieber, der mit dem Sperrbolzen in Eingriff ist und dazu ausgebildet ist, den Sperrbolzen zwischen der Entriegelungsposition und der Verriegelungsposition zu bewegen. Die Lenkradverriegelung umfasst ein Verriegelungselement, welches von einer Rückhalteposition in eine Sperrposition überführbar ist, um in der Sperrposition den Sperrbolzen in der Verriegelungsposition zu halten, ein Sicherungselement zum Halten des Verriegelungselements in der Rückhalteposition, einer Gehäuseabdeckung und einem elastischen Element, insbesondere ein Federelement, welches zwischen dem Schieber und der Gehäuseabdeckung angeordnet ist.

Bekannte Lenkradverriegelungen für Kraftfahrzeuge weisen mit einem Schließzylinder betätigbare Sperrriegel auf, welche in Ihrer sperrenden Lage durch ein federbelastetes Sperrstück sperrbar ausgebildet sind, wobei das Sperrstück in seiner entsperrten Lage gegen den Druck der Feder durch ein Sicherungsstück gehalten wird, das bei unbefugter Entfernung des Schließzylinders aus dem Schlossgehäuse das Sperrstück in die entsperrende Lage freigibt.

Aus der Druckschrift EP0071803 A1 ist eine derartige Lenkradverriegelung bekannt, welche ein freigebendes Sicherungsstück in Form eines zum Sperrriegel parallel angeordneten und längsbeweglichen Drahtes aufweist, dessen äußeres Ende in den Weg des Sperrstücks hineinragt und dessen inneres Ende zumindest in der Schlüsselabzugsstellung mit dem Schließzylinder derart verbunden ist, dass eine Bewegung des Schließzylinders aus dem Schlossgehäuse heraus zu einer Bewegung des Drahtes in die das Sperrstück freigebende Stellung führt.

Derartige Lenkradverriegelungen weisen einerseits den Nachteil auf, dass sie durch die Anordnung des Sicherungsstücks und die Anordnung der vorzuspannenden Feder des Sperrstücks im Inneren des Gehäuses der Lenkradverriegelung aufwendig zu montieren sind. Andererseits sind derartige Sicherungseinrichtungen von Lenkradverriegelungen verhältnismäßig einfach zu umgehen, da sie lediglich durch Entfernen des Schließzylinders aus dem Gehäuse heraus ausgelöst werden. EP 2 275 313 A1 offenbart eine Lenkradverriegelung gemäß dem Oberbegriff des Anspruchs 1.

Es ist daher die der Erfindung zugrunde liegende Aufgabe, eine Lenkradverriegelung mit einer Sicherheitseinrichtung anzugeben, welche die aus dem Stand der Technik bekannten Probleme überwindet, einfach zu montieren ist und eine verbesserte Sicherheitseinrichtung umfasst, die nur mit großem Aufwand zu umgehen ist.
Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.
Gemäß einem Aspekt der Erfindung wird die Aufgabe durch eine Lenkradverriegelung zur Verriegelung einer Lenkwelle eines Kraftfahrzeugs mit einem Sperrbolzen gelöst, der zwischen einer Verriegelungsposition, in welcher der Sperrbolzen die Lenkwelle blockiert, und einer Entriegelungsposition, in welcher der Sperrbolzen die Lenkwelle freigibt, bewegbar ausgebildet ist, einem Schieber, der mit dem Sperrbolzen in Eingriff ist und dazu ausgebildet ist, den Sperrbolzen zwischen der Entriegelungsposition und der Verriegelungsposition zu bewegen, einem Verriegelungselement, welches von einer Rückhalteposition in eine Sperrposition überführbar ist, um in der Sperrposition den Sperrbolzen in der Verriegelungsposition zu halten, einem Sicherungselement zum Halten des Verriegelungselements in der Rückhalteposition, einer Gehäuseabdeckung und einem elastischen Element, insbesondere einem Federelement, welches zwischen dem Schieber und der Gehäuseabdeckung angeordnet ist, wobei zwischen der Gehäuseabdeckung und dem elastischen Element ein Auslöseelement angeordnet ist, welches mit dem Sicherungselement in Eingriff steht. Dadurch wird beispielsweise der technische Vorteil erreicht, dass zum Freigeben des Verriegelungselements nicht erst der gesamte Schließzylinder aus dem Gehäuse entfernt werden muss sondern lediglich ein Öffnen der Gehäuseabdeckung zur Entspannung der Feder und somit zur Freigabe des Verriegelungselements führt. Dadurch wird ein unbefugtes Entfernen des Sperrbolzens aus der Verriegelungsposition deutlich erschwert. Zusätzlich wird der technische Vorteil erreicht, dass die Montage durch das Anordnen der vorgespannten Feder im Gehäuse der Lenkradverriegelung mittels des Auslöseelements deutlich vereinfacht wird.

In einer vorteilhaften Ausführungsform ist das Sicherungselement bei zumindest teilweisem Entfernen der Gehäuseabdeckung durch Entspannung des elastischen Elements bewegbar und dadurch das Verriegelungselement freigebbar ausgebildet. Dadurch wird erreicht, dass die Gehäuseabdeckung nicht erst vollständig von dem Gehäuse der Lenkradverriegelung entfernt werden muss. Lediglich ein geringfügiges Öffnen der Gehäuseabdeckung reicht somit aus, um eine Entspannung bzw. teilweise Entspannung des elastischen Elements und damit eine unmittelbare Freigabe des Verriegelungselements durch das Sicherungselement zu ermöglichen. Dadurch wird ein unbefugtes Entfernen des Sperrbolzens aus der Verriegelungsposition zusätzlich erschwert und die Sicherheit gegen unbefugtes Öffnen der Lenkradverriegelung erhöht.

In einer weiteren Ausführungsform weist der Sperrbolzen eine Verriegelungsausnehmung auf und das Verriegelungselement ist dazu ausgebildet, in der Sperrposition in die Verriegelungsausnehmung einzugreifen. Vorteilhaft ist hierbei, dass das Eingreifen des Verriegelungselements besonders gut abgesichert ist. Wenn das Verriegelungselement durch unbefugtes Öffnen des Gehäuses der Lenkradverriegelung in die Verriegelungsausnehmung eingegriffen hat, so ist es nur unter zusätzlich erschwerten Bedingungen möglich den gesperrten Sperrbolzen aus dem Sperrkranz zu entfernen. Auch hierdurch wird ein unbefugtes Entfernen des Sperrbolzens aus der Verriegelungsposition zusätzlich erschwert und die Sicherheit gegen unbefugtes Öffnen der Lenkradverriegelung weiter erhöht.

Gemäß einer noch weiteren Ausführungsform ist die Verriegelungsausnehmung des Sperrbolzens stufenförmig ausgebildet ist. Dadurch wird beispielsweise der technische Vorteil erreicht, dass eine Absicherung durch das Verriegelungselement auch dann möglich ist, wenn das Verriegelungselement nicht vollständig in die Verriegelungsausnehmung eingreifen kann. Dies ist beispielsweise in einem Zustand denkbar, in welchem sich der Sperrbolzen in einer Verriegelungsposition zum Blockieren der Lenkwelle befindet, jedoch nicht in eine Ausnehmung eines Sperrkranzes eingreift sondern zufällig auf einen Zahn des Sperrkranzes trifft. In diesem Fall kann das Verriegelungselement nicht an der tiefsten Stelle der Verriegelungsausnehmung in dieselbe eingreifen, sondern kann lediglich an einer weniger tiefen Stelle an einem Rand der Verriegelungsausnehmung in diese eingreifen. Hierbei stellt die stufenförmige Ausgestaltung der Verriegelungsausnehmung sicher, dass der Sperrbolzen auch bei unvollständigem Eingriff sicher gehalten wird. Hierdurch wird ein unbefugtes Entfernen des Sperrbolzens aus der Verriegelungsposition also auch in einem Fall erschwert, in dem der Sperrbolzen nicht in eine Ausnehmung eines Sperrkranzes eingreift sondern auf einen Zahn des Sperrkranzes trifft.

Nach einer noch vorteilhafteren Ausführungsform ist ein zweites elastisches Element an dem Verriegelungselement angeordnet. Dadurch wird der Vorteil erreicht, dass das Verriegelungselement auf einfache und zuverlässige Art und Weise in die Sperrposition überführbar ist. Wenn sich das Verriegelungselement in der Rückhalteposition befindet, so ist das zweite elastische Element vorgespannt und wird durch das Sicherungselement gehalten. Durch Entspannung des elastischen Elements und die damit verbundene Freigabe des Sicherungselements über das Auslöseelement wird das zweite elastische Element freigegeben und entspannt sich aus seinem vorgespannten Zustand. Hierbei wird das Verriegelungselement in die Sperrposition überführt und greift in die stufenförmige Verriegelungsausnehmung des Sperrbolzens ein.

Gemäß einer besonders vorteilhaften Ausführungsform umfasst die Lenkradverriegelung einen Schließzylinder mit einem Betätiger und eine an dem Schieber ausgebildete Kulisse, wobei der Betätiger ausgebildet ist, auf die Kulisse einzuwirken. Dadurch wird vorteilhafter Weise erreicht, dass durch einfaches Drehen eines Schlüssels in dem Schließzylinder über den Betätiger und die an dem Schieber ausgebildete Kulisse die Position des Sperrbolzens bestimmt bzw. verändert werden kann. Somit kann der Sperrbolzen auf einfache Art und Weise zwischen der Entriegelungsposition und der Verriegelungsposition bewegt werden und ein Nutzer eines Kraftfahrzeugs kann beispielsweise den Zündschlüssel in den Schließzylinder einführen und den Sperrbolzen durch Drehen des Schlüssels von der Verriegelungsposition in die Entriegelungsposition überführen.

In einer noch weiteren Ausführungsform weist das Auslöseelement einen Haltevorsprung zum Fixieren des elastischen Elements auf. Dies ermöglicht, dass das Auslöseelement insbesondere beim Zusammenbau bzw. beim Montieren der Lenkradverriegelung unter Zuhilfenahme des Haltevorsprungs sicherstellen kann, dass das elastische Element an der vorgesehenen Position im Gehäuse der Lenkradverriegelung verbleibt. Insbesondere durch das Vorspannen des elastischen Elements kann es vorkommen, dass dieses während des Montierens innerhalb des Gehäuses seine vorgesehene Position verlässt. Dieses Risiko wird durch den Haltevorsprung am Auslöseelement gelöst und ermöglicht eine vereinfachte Montage der Lenkradverriegelung.
Gemäß einer besonderen weiteren Ausführungsform ist der Haltevorsprung kegelförmig oder zylinderförmig ausgebildet. Dadurch wird ermöglicht, dass durch Eingreifen des kegelförmigen oder zylinderförmigen Haltevorsprungs in das elastische Element, beispielsweise in Form einer Spiralfeder, eine sehr präzise Ausrichtung erfolgen kann. Wenn der Haltevorsprung in das elastische Element eingegriffen hat und das elastische Element zusätzlich vorgespannt wird, dann erfolgt die präzise Ausrichtung des elastischen Elements von selbst. Gemäß der Erfindung ist das Auslöseelement als Blechbügel ausgebildet und dazu vorgesehen, einen innenliegenden Teil der Lenkradverriegelung, insbesondere das elastische Element, abzudecken. Dadurch wird insbesondere der Vorteil erreicht, dass das Auslöseelement eine zusätzliche Schutzfunktion für innenliegende Teile der Lenkradverriegelung ausübt. Wenn die Gehäuseabdeckung gewaltsam geöffnet wird, stellt das Auslöseelement ein zusätzliches Hindernis in Form einer Verstärkung bzw. Verdickung der Gehäuseabdeckung dar, welches zusätzlich überwunden werden muss. Ein derartiges unbefugtes Öffnen ist beispielsweise mit Hilfe einer Bohrmaschine denkbar. Diese Ausführungsform erhöht zumindest die Zeitspanne, die ein Unberechtigter benötigen würde, um die Lenkradverriegelung zu öffnen oder den Sperrbolzen aus der Verriegelungsposition zu entfernen.
Gemäß einer zusätzlichen Ausführungsform ist das Auslöseelement im Wesentlichen komplementär zu der Gehäuseabdeckung ausgebildet. Dadurch wird insbesondere erreicht, dass zusätzlich zu der bereits angeführten verbesserten Schutzfunktion eine Bauraumersparnis in der Lenkradverriegelung erreicht werden kann. Mit anderen Worten ist somit eine besonders kompakte Ausgestaltung der Lenkradverriegelung und insbesondere ihres Gehäuses realisierbar.
In einer weiteren zusätzlichen Ausführungsform umfasst das Sicherungselement einen Stift, welcher an einer Befestigung des Auslöseelements fixierbar ausgebildet ist. Dadurch wird der technische Vorteil erreicht, dass die Verbindung bzw. das Eingreifen des Sicherungselements in das Auslöseelement mit sehr einfachen Mitteln realisiert werden kann. Hierbei kann gegebenenfalls auf bestehende Sicherungselemente zurückgegriffen werden und muss lediglich eine Anpassung an die vorliegende Ausführungsform erfolgen. Dies kann unter der Berücksichtigung der Umstände mit sehr geringem technischen Aufwand und geringen Kosten realisiert werden. Nach einer besonderen Ausführungsform ist die Befestigung an einer innenliegenden Seite des Auslöseelements angeordnet. Der technische Vorteil beinhaltet, dass neben der bereits ausgeführten einfachen technischen Realisierung eine weitere Bauraumersparnis erreicht werden kann. Hierbei kann die Befestigung am Auslöseelement beispielsweise durch einen an einer Innenseite des Auslöseelements ausgebildeten Haken realisiert werden.

Nach einem nicht erfindungsgemäßen Beispiel sind das Auslöseelement und das Sicherungselement durch ein einteiliges Formteil gebildet. Dadurch wird insbesondere ermöglicht, dass Herstellung und Montage der Lenkradverriegelung zusätzlich vereinfacht wird. Es besteht folglich keine Veranlassung das Auslöseelement und das Sicherungselement in einem gesonderten Arbeitsschritt bei der Montage in Eingriff zu bringen, da Auslöseelement und Sicherungselement integral ausgebildet sind. Besonders vorteilhaft weist nach einer Ausführungsform das Auslöseelement eine Aussparung und die Gehäuseabdeckung einen Sicherungsstift auf, wobei die Aussparung und der Sicherungsstift dazu ausgebildet sind, bei einer Verschiebung der Gehäuseabdeckung durch Entspannung des elastischen Elements ineinanderzugreifen.
Dadurch wird der technische Vorteil erreicht, dass das Freigeben des Verriegelungselements bereits durch Verrücken der Gehäuseabdeckung relativ zu dem Auslöseelement erfolgt. Durch Verschieben werden die Aussparung am Auslöseelement und der Sicherungsstift an der Gehäuseabdeckung ausgerichtet und können durch Entspannung des elastischen Elements ineinander eingreifen. Folglich muss nicht erst die gesamte Gehäuseabdeckung zum Freigeben des Verriegelungselements entfernt werden, sondern lediglich die Gehäuseabdeckung geringfügig verrückt oder verschoben werden. Somit wird die Auslöseempfindlichkeit des Auslöseelements zusätzlich erhöht und die Sicherheit der Lenkradverriegelung insgesamt verbessert.

Gemäß einer weiteren Ausführungsform weist die Aussparung einen Aussparungsstift auf, welcher dazu ausgebildet ist mit dem Sicherungsstift der Gehäuseabdeckung zusammenzuwirken. Vorteilhafter Weise kann dadurch bereits bei geringfügiger Verschiebung der Gehäuseabdeckung die Aussparung am Auslöseelement und der Sicherungsstift an der Gehäuseabdeckung durch Entspannung des elastischen Elements ineinander eingreifen. Hierbei kann dies unabhängig von der Richtung des Verschiebens der Gehäuseabdeckung relativ zu dem Auslöseelement erfolgen. Sobald die stirnseitige Ausrichtung eines ordnungsgemäß montierten Zustands des gehäuseabdeckungsseitigen Sicherungsstifts mit dem auslöseelementseitigen Aussparungsstift durch minimale Verschiebung der Gehäuseabdeckung in irgendeine Richtung gestört wird, greift der Sicherungsstift in die Aussparung des Auslöseelements ein. Hierbei wird das elastische Element entspannt und das Verriegelungselement wird über das Auslöseelement bzw. das Sicherungselement freigegeben. Somit wird die Auslöseempfindlichkeit des Auslöseelements nochmals erhöht und die Sicherheit der Lenkradverriegelung zusätzlich verbessert.

Nach einer noch weiteren vorteilhaften Ausführungsform weist der Sperrbolzen einen Eingriff und der Schieber einen Vorsprung auf. Dadurch ergibt sich, dass zwischen Sperrbolzen und Schieber eine kraftschlüssige Verbindung besteht. Die Bewegung des Schiebers, welche durch den Betätiger des Schließzylinders vorgegeben wird, kann somit auf den Sperrbolzen übertragen werden.

Einer vorteilhaften Ausführungsform zufolge sind der Sperrbolzen und der Schieber entlang einer Kontaktfläche zwischen dem Eingriff und dem Vorsprung verschiebbar ausgebildet. Dadurch ergibt sich beispielsweise der Vorteil, dass einerseits eine Kraftübertragung des Schiebers auf den Sperrbolzen erfolgen kann. Gleichzeitig ist es durch die verschiebbare Ausbildung entlang einer Kontaktfläche, die in einem bestimmten Winkel zwischen Schieber und Sperrbolzen steht möglich, eine Winkeldifferenz zwischen der Bewegungsrichtung des Schiebers und der des Sperrbolzens trotz Kraftübertragung zu überbrücken.

Zufolge einem noch weiteren nicht erfindungsgemäßen Beispiel sind der Sperrbolzen und der Schieber durch ein einteiliges Sperrelement gebildet. Dadurch wird insbesondere erreicht, dass die Anzahl der Bauteil reduziert und die mechanische Ausgestaltung der Lenkverriegelung vereinfacht wird.
Nach einer weiteren Ausführungsform umfasst die Lenkradverriegelung einen Sperrkranz, in welchen der Sperrbolzen in der Verriegelungsposition zum Blockieren einer Lenkwelle eingreift. Dadurch wird beispielsweise der technische Vorteil erreicht, dass der Sperrbolzen nicht direkt in die Lenkwelle eingreifen muss, sondern in Ausnehmungen eines Sperrkranzes. Dies ermöglicht eine mechanisch stabilere Verriegelung, da im Falle einer Drehmomenteinleitung auf die Lenkwelle eine verbesserte Kraftübertragung vom Sperrbolzen auf den Sperrkranz realisiert wird.

Ausführungsbeispiele der Erfindung sind in den Zeichnungen dargestellt und werden im Folgenden näher beschrieben.

Es zeigen:
- Fig. 1a: eine schematische Darstellung einer Lenkradverriegelung in verriegeltem Zustand,
- Fig. 1b: eine Querschnittsansicht der Lenkradverriegelung aus Fig. 1 a,
- Fig. 2a: eine schematische Darstellung einer Lenkradverriegelung in entriegeltem Zustand,
- Fig. 2b: eine Querschnittsansicht der Lenkradverriegelung aus Fig. 2a,
- Fig. 3a: eine schematische Darstellung einer Lenkradverriegelung mit gesperrtem Sperrbolzen,
- Fig. 3b: eine Querschnittsansicht der Lenkradverriegelung aus Fig. 3a,
- Fig. 4a: eine schematische Darstellung einer Ausführungsform einer Lenkradverriegelung,
- Fig. 4b: eine Querschnittsansicht der Lenkradverriegelung aus Fig. 4a,
- Fig. 5: eine schematische Darstellung einer Lenkradverriegelung,
- Fig. 6a: ein Ausschnitt einer schematischen Querschnittsdarstellung einer zusätzlichen Ausführungsform einer Lenkradverriegelung, und
- Fig. 6b: eine Draufsicht der Lenkradverriegelung aus Fig. 6a.

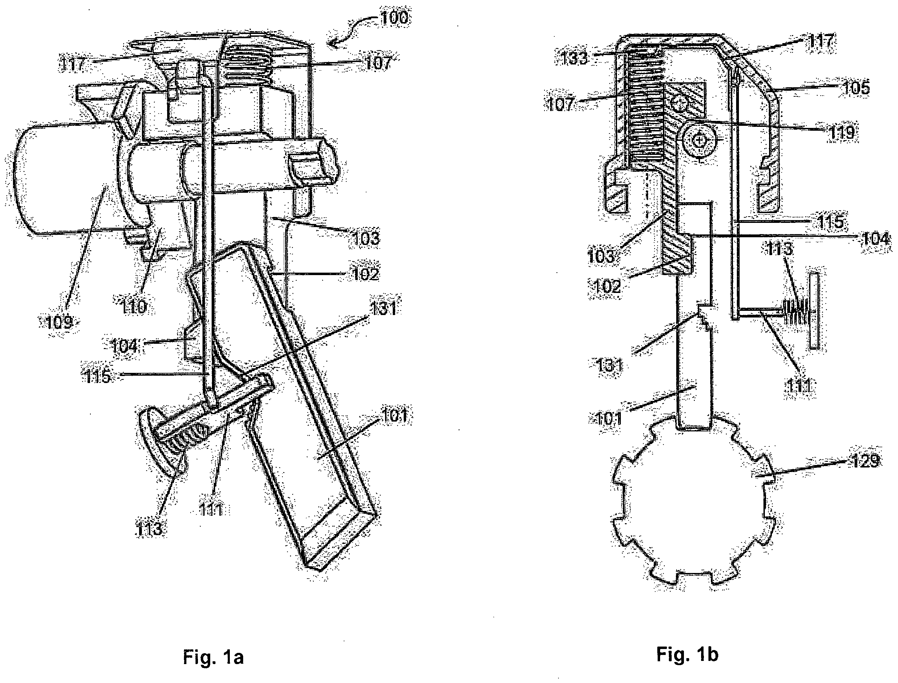

Fig. 1a und Fig. 1b zeigen eine schematische Darstellung einer Lenkradverriegelung 100 im verriegelten Zustand. Der untere Teil eines Sperrbolzens 101 greift hierbei in eine Ausnehmung eines Sperrkranzes 129 ein, wodurch die Lenkradverriegelung 100 eine Lenkwelle eines Kraftfahrzeugs blockiert. Der am Schließzylinder 109 angeordnete Betätiger 110 befindet sich in diesem verriegelten Zustand in einer Position, in welcher der Betätiger 110 nicht mit einer Kulisse 119 eines Schiebers 103 in Eingriff ist. Ein elastisches Element 107 befindet sich zwischen dem Schieber 103 und einem Auslöseelement 117 in einem vorgespannten Zustand. Das elastische Element 107 umfasst vorzugsweise eine Spiralfeder. Es kann jedoch alternativ aus jedem denkbaren Kraftspeicher wie beispielsweise einem Schaumgummi bestehen. Hierbei ist das Auslöseelement 117 gegenüber einer Gehäuseabdeckung 105 abgestützt und kann nur durch ein Öffnen oder Entfernen der Gehäuseabdeckung 105 entspannt werden. Das Auslöseelement 117 ist als Abdeckblech ausgebildet und dient als zusätzliche Schutzabdeckung für innenliegende Teile der Lenkradverriegelung 100. Insbesondere wird dadurch das elastische Element 107 zusätzlich vor unbefugtem Zugriff geschützt. Das Auslöseelement 117 ist im Wesentlichen komplementär zu der Gehäuseabdeckung 105 ausgebildet. Dadurch wird zusätzlich eine verbesserte Schutzfunktion der innenliegenden Teile und insbesondere des elastischen Elements 107 erreicht. Zusätzlich lässt sich eine Bauraumersparnis in der Lenkradverriegelung erreichen, wodurch die Lenkradverriegelung 100 besonders kompakt ausgebildet werden kann.

Das Auslöseelement 117 umfasst einen Haltevorsprung 133 in Form eines Kegelstumpfes um das vorgespannte elastische Element 107 gegen Verrutschen abzusichern. Dies ist insbesondere bei der Montage bzw. beim Zusammensetzen der Lenkradverriegelung 100 von besonderer Bedeutung. Hierbei ermöglicht der Haltevorsprung 133 ein einfaches Einsetzen des elastischen Elements 107 und sichert dieses gegen Verrutschen während des Vorspannens bei der Montage im Gehäuse ab. Das Auslöseelement 117 befindet sich mit einem Sicherungselement 115 in Eingriff, welches ein Verriegelungselement 111 in einer Rückhalteposition hält. Beispielsweise kann das Sicherungselement 115 einen Stift umfassen um das Sicherungselement 115 besonders einfach und preiswert herzustellen. Jedoch kann das Sicherungselement 115 alternativ auch durch einen Draht, einen Hebel, eine Zugvorrichtung oder eine sonstige Konstruktion realisiert werden, solange der Wirkungszusammenhang zwischen der durch Entspannung des elastischen Elements 107 verursachten Bewegung und dem Freigeben des Verriegelungselements 111 gewährleistet ist. Am Verriegelungselement 111 ist ein zweites elastisches Element 113 in einem vorgespannten Zustand vorgesehen, welches auf das Verriegelungselement 111 einwirkt und es durch Entspannung in eine Sperrposition überführt. Dies erfolgt allerdings nur, wenn das Verriegelungselement 111 von dem Sicherungselement 115 freigegeben wird. Auch das zweite elastische Element 113 umfasst vorzugsweise eine Spiralfeder. Es kann jedoch alternativ auch aus jedem denkbaren Kraftspeicher wie beispielsweise einem Schaumgummi bestehen.

Das Sicherungselement 115 umfasst an seiner dem Auslöseelement 117 zugewandten Seite einen Haken, welcher an einer Befestigung des Auslöseelements 117 in Eingriff gebracht ist. Die Befestigung ist hierbei durch einfaches Ausbilden eines Befestigungshakens an dem Auslöseelement 117 realisiert. Alternativ ist es jedoch denkbar, die Befestigung mittels einer zusätzlichen Befestigungsvorrichtung wie einem Niet oder einer Öffnung im Auslöseelement 117 zu realisieren. Besonders empfehlenswert wäre aus Gründen der bereits angesprochenen Bauraumersparnis die Befestigung an einer innenliegenden Seite des Auslöseelements 117 anzuordnen. Wenn die Gehäuseabdeckung 105 der Lenkradverriegelung 100 geöffnet oder entfernt wird, so wird dadurch das Auslöseelement 117 durch die Kraft des vorgespannten elastischen Elements 107 bewegt bzw. angehoben. In der Konsequenz gibt das mit dem Auslöseelement 117 in Eingriff stehende Sicherungselement 115 das Verriegelungselement 111 frei. Durch die Freigabe des Verriegelungselements 111 kann sich das vorgespannte zweite elastische Element 113 entspannen und überführt das Verriegelungselement 111 von einer Rückhalteposition in eine Sperrposition.

In der Sperrposition greift das Verriegelungselement 111 in eine am Sperrbolzen 101 angeordnete Verriegelungsausnehmung 131 ein und sichert die Verriegelungsposition des Sperrbolzens 101 zusätzlich ab. Durch eine stufenförmige Ausbildung der Verriegelungsausnehmung 131 ist eine Absicherung durch das Verriegelungselement 111 auch dann möglich ist, wenn das Verriegelungselement 111 nicht vollständig in die Verriegelungsausnehmung 131 eingreifen kann. Dies ist insbesondere dann der Fall, wenn sich der Sperrbolzen 101 in einer Verriegelungsposition zum Blockieren der Lenkwelle befindet, jedoch nicht in eine Ausnehmung eines Sperrkranzes 129 eingreifen kann weil er auf einen Zahn des Sperrkranzes 129 trifft. In diesem Fall kann das Verriegelungselement 111 nicht an der tiefsten Stelle in die Verriegelungsausnehmung 131 eingreifen, sondern kann lediglich an einer Stelle an einem Randbereich der Verriegelungsausnehmung 131 in diese eingreifen. Hierbei stellt die stufenförmige Ausgestaltung der Verriegelungsausnehmung 131 insbesondere sicher, dass der Sperrbolzen 101 auch bei unvollständigem Eingriff sicher gehalten wird.

Der Sperrbolzen 101 umfasst einen Eingriff 102 und der Schieber 103 umfasst einen Vorsprung 104. Dadurch wird zwischen Sperrbolzen 101 und Schieber 103 eine kraftschlüssige Verbindung erreicht, welche eine Übertragung einer Bewegung des Schiebers 103, welche durch den Betätiger 110 des Schließzylinders 109 vorgegeben wird, auf den Sperrbolzen 101 ermöglicht. Allerdings sind der Sperrbolzen 101 und der Schieber 103 entlang einer Kontaktfläche zwischen dem Eingriff 102 und dem Vorsprung 103 verschiebbar ausgebildet. Das hat zur Folge, dass die Bewegungsübertragung des Schiebers 103 auf den Sperrbolzen 101 über einem bestimmten Winkel erfolgen kann. Somit ist es beispielsweise möglich die Lenkradverriegelung 100 flexibel an eine vorgegebene Winkelanordnung einer Lenkwelle eines Kraftfahrzeugs anzupassen. Nicht erfindungsgemäß ist es denkbar, den Sperrbolzen 101 und den Schieber 103 durch ein einteiliges Sperrelement auszubilden. Dies würde die Anzahl der Bauteile reduzieren und die mechanische Ausgestaltung der Lenkverriegelung 100 zusätzlich vereinfachen. Dies hätte jedoch zur Folge, dass ein Richtungswechsel der Bewegung des Schiebers 103 auf die Bewegungsrichtung des Sperrbolzens 101 nicht möglich ist. In der Konsequenz müsste die Bewegung des Sperrbolzens 101 aus der Verriegelungsposition in die Entriegelungsposition oder umgekehrt parallel zur Bewegungsrichtung des Schiebers 103 erfolgen.

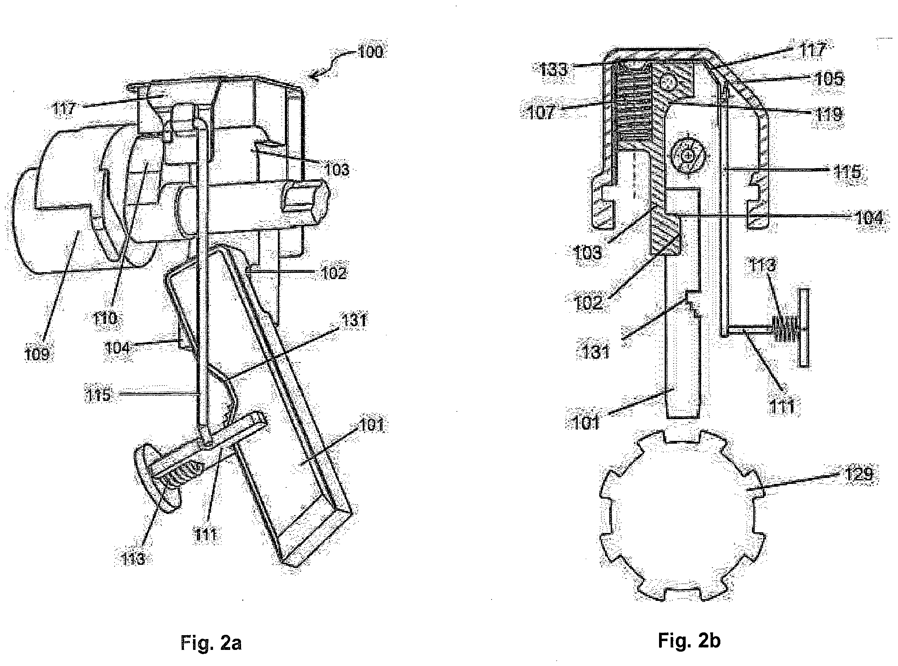

Fig. 2a und 2b zeigen eine schematische Darstellung der Lenkradverriegelung 100 in einem entriegelten Zustand. Auf eine wiederholte Beschreibung identischer Merkmale der vorausgehenden Figuren wird verzichtet. Der Sperrbolzen 101 befindet sich in einer Entriegelungsposition, in welcher der Sperrbolzen 101 die Ausnehmung des Sperrkranzes 129 freigibt. Der Schließzylinder 109 befindet sich in diesem Zustand in einer Position in welcher der Betätiger 110 in die Kulisse 119 des Schiebers 103 eingreift und diesen gegen die Kraft des elastischen Elements 107 in die Entriegelungsposition überführt hat. Aufgrund des kraftschlüssigen Eingriffs des Schiebers 103 in den Sperrbolzen 101 wird der Sperrbolzen 101 zusammen mit dem Schieber 103 in die Entriegelungsstellung überführt. Hierbei weist der Sperrbolzen 101 den Eingriff 102 auf, der mit einem Vorsprung 104 des Schiebers 103 zusammenwirkt. Der Sperrbolzen 101 und Schieber 103 sind entlang der Kontaktfläche zwischen Eingriff 102 und Vorsprung 104 verschiebbar ausgebildet und die Kontaktfläche ist hierbei orthogonal zu einer Verriegelungsrichtung des Sperrbolzens 101 bzw. parallel zu einer Drehachse des Sperrkranzes 129 ausgebildet. Damit ist es möglich die Bewegungsrichtung des Schiebers 103 in die abgewinkelte Bewegungsrichtung des Sperrbolzens 101 zu überführen und umgekehrt.

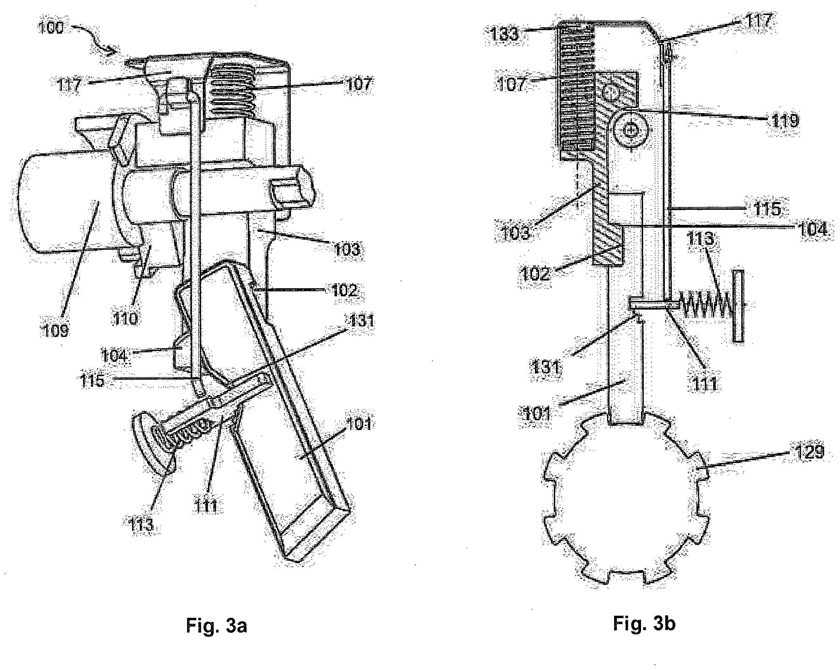

Fig. 3a und 3b zeigen eine schematische Darstellung der Lenkradverriegelung 100 mit gesperrtem Sperrbolzen 101. Auf eine wiederholte Beschreibung identischer Merkmale der vorausgehenden Figuren wird verzichtet. Der Sperrbolzen 101 befindet sich in der Verriegelungsposition, wobei dieser in eine Ausnehmung des Sperrkranzes 129 eingreift. Das mit dem Sicherungselement 115 in Eingriff stehende Auslöseelement 117 ist durch Entspannung des elastischen Elements 107 angehoben, wodurch das Verriegelungselement 111 freigegeben und durch Entspannung des zweiten elastischen Elements 113 in die Sperrposition überführt ist. Hierbei greift ein vorderer Teil des Verriegelungselements 111 in die seitlich am Sperrbolzen 101 angeordnete Verriegelungsausnehmung 131 ein und sperrt diesen in der Verriegelungsposition. Die Verriegelungsausnehmung 131 weist hierbei die stufenförmige Struktur auf, um den Sperrbolzen 101 auch dann abzusichern, wenn das Verriegelungselement 111 nicht vollständig in die Verriegelungsausnehmung 131 eingreifen kann, weil der Sperrbolzen 101, aufgrund eines zufällig eine Ausnehmung des Sperrkranzes 129 blockierenden Zahnes, nicht in eine Ausnehmung des Sperrkranzes 129 eingreifen kann. In diesem Fall kann das Verriegelungselement 111 zwar nicht vollständig in die Verriegelungsausnehmung 131 eingreifen, wird jedoch von der stufenartigen Struktur am unteren Teil der Verriegelungsausnehmung 131 gehalten.

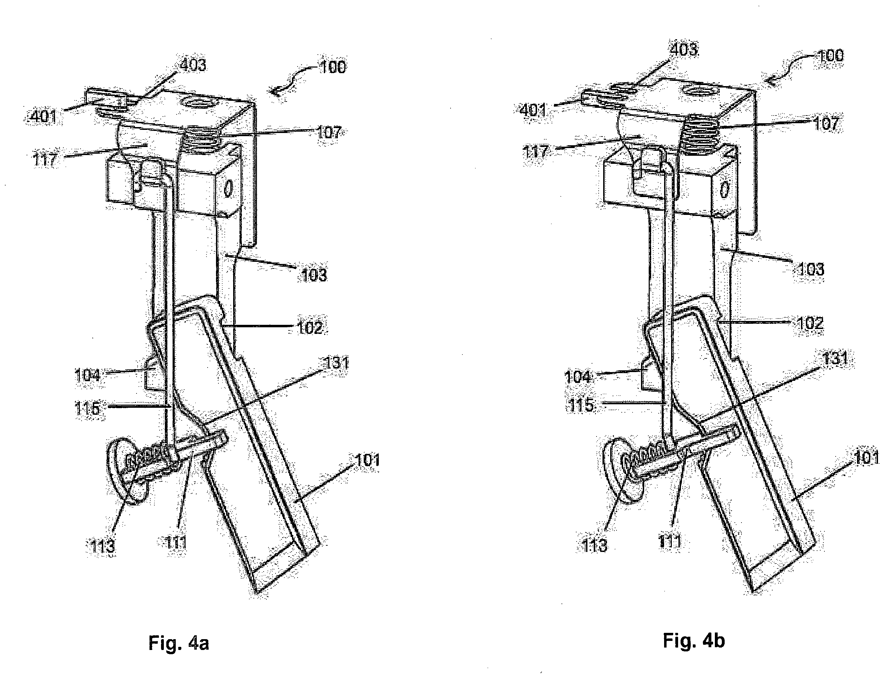

Fig. 4a und 4b zeigen eine schematische Darstellung einer Ausführungsform einer Lenkradverriegelung 100. Auf eine wiederholte Beschreibung identischer Merkmale der vorausgehenden Figuren wird verzichtet. Das Auslöseelement 117 weist hierbei eine Aussparung 403 auf und die Gehäuseabdeckung 105 weist einen Sicherungsstift 401 auf. Die Aussparung 403 und der Sicherungsstift 401 sind im montierten Zustand der Lenkradverriegelung 100 leicht versetzt angeordnet und können in diesem Zustand nicht ineinandergreifen. Wenn die Gehäuseabdeckung 105 jedoch nur leicht, beispielsweise durch gewaltsames Öffnen oder Entfernen der Gehäuseabdeckung 105, relativ zu dem Auslöseelement 117 verschoben wird, geraten die Aussparung 403 und der Sicherungsstift 401 durch Entspannung des elastischen Elements 107 miteinander in Eingriff. Dabei wird das Verriegelungselement 111 durch das Sicherungselement freigegeben und das zweite elastische Element 113 überführt das Verriegelungselement 111 in die Sperrposition.

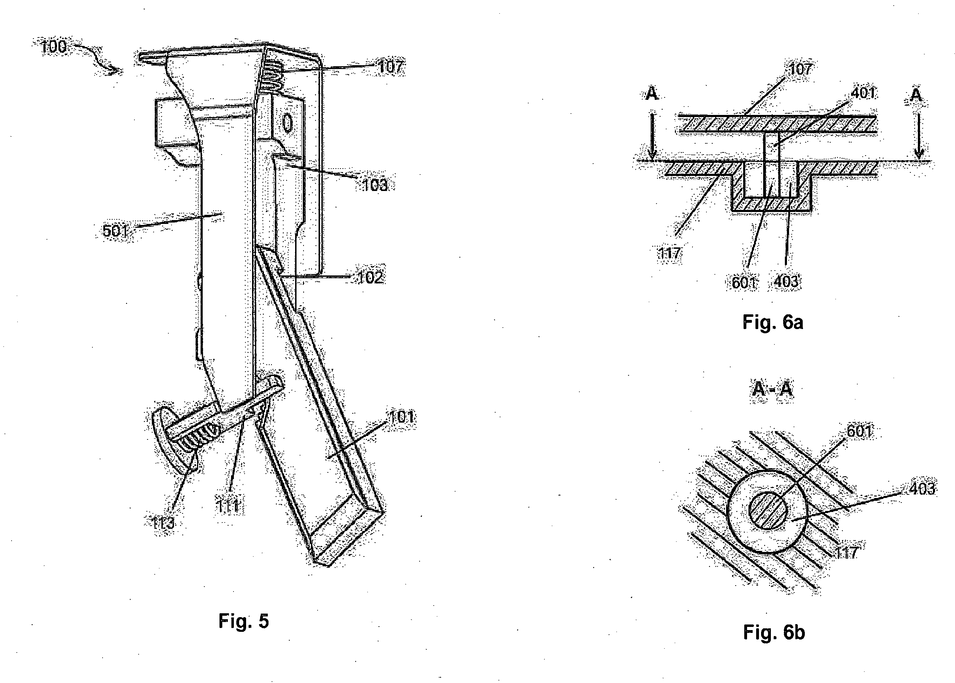

Fig. 5 zeigt eine schematische Darstellung einer Lenkradverriegelung 100. Auf eine wiederholte Beschreibung identischer Merkmale der vorausgehenden Figuren wird verzichtet. Das Auslöseelement 117 und das Sicherungselement 115 sind in dieser Ausführungsform durch ein einteiliges Formteil 501 gebildet. Vorzugsweise kann das Auslöseelement 117 als Blechbügel ausgebildet sein, wobei ein verlängerter Arm des Blechbügels als Sicherungselement 115 ausgebildet ist. Hierbei könnte das Auslöseelement 117 auch die Aufgabe erfüllen einen innenliegenden Teil der Lenkradverriegelung 100 und insbesondere das elastische Element 107 abzudecken, wobei auch eine im Wesentlichen komplementäre Ausbildung des Auslöseelements 117 realisierbar ist. Dies verbessert zusätzlich die Schutzfunktion der innenliegenden Teile und insbesondere des elastischen Elements 107. Ebenso lässt sich hierbei auch eine Bauraumersparnis in der Lenkradverriegelung 100 erreichen, wodurch die Lenkradverriegelung 100 besonders kompakt ausgebildet werden kann.

Fig. 6a und 6b zeigen einen Ausschnitt einer schematische Querschnittsdarstellung einer weiteren Ausführungsform der Lenkradverriegelung 100. Auf eine wiederholte Beschreibung identischer Merkmale der vorausgehenden Figuren wird verzichtet. Das Auslöseelement 117 weist hierbei eine zylinderförmige Aussparung 403 auf, in deren Mittelpunkt ein Aussparungsstift 601 angeordnet ist. Die Gehäuseabdeckung 105 weist den Sicherungsstift 401 auf, der im montierten Zustand der Lenkradverriegelung 100 mit dem Aussparungsstift 601 stirnseitig ausgerichtet ist und auf diesen aufsteht. Wenn die Gehäuseabdeckung 105 jedoch nur geringfügig, beispielsweise durch Öffnen oder Entfernen der Gehäuseabdeckung 105, relativ zu dem Auslöseelement 117 verschoben wird, gerät der Sicherungsstift 401 durch Entspannung des elastischen Elements 107 in die zylinderförmige Aussparung 403 des Auslöseelements 117, wodurch das Verriegelungselement 111 durch das Sicherungselement 115 freigegeben wird und das zweite elastische Element 113 das Verriegelungselement 111 in die Sperrposition überführt. Besonders vorteilhaft ist bei dieser Ausführungsform, dass ein Verschieben der Gehäuseabdeckung 105, relativ zu dem Auslöseelement 117, in jede Richtung zur Freigabe des Verriegelungselements 111 führt. Sobald die stirnseitige Ausrichtung des gehäuseabdeckungsseitigen Sicherungsstifts 401 mit dem auslöseelementseitigen Aussparungsstift 601 durch minimale Verschiebung der Gehäuseabdeckung 105 in irgendeine Richtung gestört wird, greift der Sicherungsstift 401 in die Aussparung 403 des Auslöseelements 117 ein.
Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

### BEZUGSZEICHENLISTE

- 100: Lenkradverriegelung
- 101: Sperrbolzen
- 102: Eingriff
- 103: Schieber
- 104: Vorsprung
- 105: Gehäuseabdeckung
- 107: Elastisches Element
- 109: Schließzylinder
- 110: Betätiger
- 111: Verriegelungselement
- 113: Zweites elastisches Element
- 115: Sicherungselement
- 117: Auslöseelement
- 119: Kulisse
- 129: Sperrkranz
- 131: Verriegelungsausnehmung
- 133: Haltevorsprung
- 401: Sicherungsstift
- 403: Aussparung
- 501: Einteiliges Formteil
- 601: Aussparungsstift

## Patentansprüche

1. Lenkradverriegelung (100) zur Verriegelung einer Lenkwelle eines Kraftfahrzeugs mit:
einem Sperrbolzen (101), der zwischen einer Verriegelungsposition, in welcher der Sperrbolzen (101) die Lenkwelle blockiert, und einer Entriegelungsposition, in welcher der Sperrbolzen (101) die Lenkwelle freigibt, bewegbar ausgebildet ist;
einem Schieber (103), der mit dem Sperrbolzen (101) in Eingriff ist und dazu ausgebildet ist, den Sperrbolzen (101) zwischen der Entriegelungsposition und der Verriegelungsposition zu bewegen;
einem Verriegelungselement (111), welches von einer Rückhalteposition in eine Sperrposition überführbar ist, um in der Sperrposition den Sperrbolzen (101) in der Verriegelungsposition zu halten;
einem Sicherungselement (115) zum Halten des Verriegelungselements (111) in der Rückhalteposition;
einer Gehäuseabdeckung (105);
und einem elastischen Element (107), insbesondere einem Federelement, welches zwischen dem Schieber (103) und der Gehäuseabdeckung angeordnet ist;
wobei zwischen der Gehäuseabdeckung (105) und dem elastischen Element (107) ein Auslöseelement (117) angeordnet ist,
welches mit dem Sicherungselement (115) in Eingriff steht,
**dadurch gekennzeichnet, dass**
das Auslöseelement (117) als Blechbügel ausgebildet
und dazu vorgesehen ist, einen innenliegenden Teil der Lenkradverriegelung (100) abzudecken,
und dass das Auslöseelement (117) einen Haltevorsprung (133) zum Fixieren des elastischen Elements (107) aufweist.

2. Lenkradverriegelung (100) nach Anspruch 1, **dadurch gekennzeichnet, dass** das Sicherungselement (115) bei zumindest teilweisem Entfernen der Gehäuseabdeckung (105) durch Entspannung des elastischen Elements (107) bewegbar und dadurch das Verriegelungselement (111) freigebbar ausgebildet ist.

3. Lenkradverriegelung (100) nach Anspruch 1 oder 2, **dadurch gekennzeichnet, dass** der Sperrbolzen (101) eine Verriegelungsausnehmung (131) aufweist und das Verriegelungselement (111) dazu ausgebildet ist, in der Sperrposition in die Verriegelungsausnehmung (131) einzugreifen.

4. Lenkradverriegelung (100) nach einem der vorangehenden Ansprüche, **dadurch gekennzeichnet, dass** die Verriegelungsausnehmung (131) des Sperrbolzens (101) stufenförmig ausgebildet ist.

5. Lenkradverriegelung (100) nach einem der vorangehenden Ansprüche, **dadurch gekennzeichnet, dass** ein zweites elastisches Element (113) an dem Verriegelungselement (111) angeordnet ist.

6. Lenkradverriegelung (100) nach einem der vorangehenden Ansprüche, **dadurch gekennzeichnet, dass** die Lenkradverriegelung (100) einen Schließzylinder (109) mit einem Betätiger (110) und eine an dem Schieber (103) ausgebildete Kulisse (119) umfasst, wobei der Betätiger (110) ausgebildet ist, auf die Kulisse (119) einzuwirken.

7. Lenkradverriegelung (100) gemäß Anspruch 71, **dadurch gekennzeichnet, dass** der Haltevorsprung (133) kegelförmig oder zylinderförmig ausgebildet ist.

8. Lenkradverriegelung (100) nach einem der vorangehenden Ansprüche, **dadurch gekennzeichnet, dass** das Auslöseelement (117) im Wesentlichen komplementär zu der Gehäuseabdeckung (105) ausgebildet ist.

9. Lenkradverriegelung (100) nach einem der vorangehenden Ansprüche, **dadurch gekennzeichnet, dass** das Sicherungselement (115) einen Stift umfasst, welcher an einer Befestigung des Auslöseelements (117) fixierbar ausgebildet ist.

10. Lenkradverriegelung (100) nach Anspruch 9, **dadurch gekennzeichnet, dass** die Befestigung an einer innenliegenden Seite des Auslöseelements (117) angeordnet ist.

11. Lenkradverriegelung (100) nach einem der vorangehenden Ansprüche, **dadurch gekennzeichnet, dass** das Auslöseelement (117) eine Aussparung (403) und die Gehäuseabdeckung (105) einen Sicherungsstift (401) aufweist, wobei die Aussparung (403) und der Sicherungsstift (401) dazu ausgebildet sind, bei einer Verschiebung der Gehäuseabdeckung (105) durch Entspannung des elastischen Elements (107) ineinanderzugreifen.

12. Lenkradverriegelung (100) nach Anspruch 121, **dadurch gekennzeichnet, dass** die Aussparung (403) einen Aussparungsstift (601) aufweist, welcher dazu ausgebildet ist mit dem Sicherungsstift (401) der Gehäuseabdeckung (105) zusammenzuwirken.

13. Lenkradverriegelung (100) nach einem der vorangehenden Ansprüche, **dadurch gekennzeichnet, dass** der Sperrbolzen (101) einen Eingriff (102) und der Schieber (103) einen Vorsprung (104) aufweisen.

14. Lenkradverriegelung (100) nach einem der vorangehenden Ansprüche, **dadurch gekennzeichnet, dass** der Sperrbolzen (101) und der Schieber (103) entlang einer Kontaktfläche zwischen dem Eingriff (102) und dem Vorsprung (104) verschiebbar ausgebildet sind.

15. Lenkradverriegelung (100) nach einem der vorangehenden Ansprüche, **dadurch gekennzeichnet, dass** die Lenkradverriegelung (100) einen Sperrkranz (129) umfasst, in welchen der Sperrbolzen (101) in der Verriegelungsposition zum Blockieren einer Lenkwelle eingreift.

16. Lenkradverriegelung (100) nach einem der vorangehenden Ansprüche, **dadurch gekennzeichnet, dass** das Auslöseelement (117) dazu vorgesehen ist, einen innenliegenden Teil der Lenkradverriegelung (100), umfassend das elastische Element (107), abzudecken.

## Claims

1. Steering wheel lock (100) for locking a steering shaft of a motor vehicle with:
a blocking bolt (101) which is designed to be movable between a locking position in which the blocking bolt (101) blocks the steering shaft and an unlocking position in which the blocking bolt (101) releases the steering shaft;
a slider (103) engaging the blocking bolt (101) and adapted to move the blocking bolt (101) between the unlocking position and the locking position;
a locking element (111) which can be transferred from a retention position to a blocking position in order to hold the blocking bolt (101) in the blocking position in the locking position;
a securing element (115) for holding the locking element (111) in the retention position;
a housing cover (105);
and an elastic element (107), in particular a spring element, which is arranged between the slider (103) and the housing cover;
wherein a release element (117) is arranged between the housing cover (105) and the elastic element (107),
which engages with the securing element (115),
**characterized in that**
the release element (117) is designed as a sheet metal bracket and is intended to cover an internal part of the steering wheel lock (100),
and that the release element (117) has a retaining projection (133) for fixing the elastic element (107).

2. Steering wheel lock (100) according to claim 1, **characterized in that** the securing element (115) is designed to be movable when the housing cover (105) is at least partially removed by relaxation of the elastic element (107), thereby releasing the locking element (111).

3. A steering wheel lock (100) according to claim 1 or 2, **characterized in that** the blocking bolt (101) has a locking recess (131) and the locking element (111) is adapted to engage the locking recess (131) in the blocking position.

4. Steering wheel lock (100) according to any one of the preceding claims, **characterized in that** the locking recess (131) of the blocking bolt (101) is formed in a step-shaped manner.

5. A steering wheel lock (100) according to any one of the preceding claims, **characterized in that** a second elastic element (113) is disposed on the locking element (111).

6. Steering wheel lock (100) according to any one of the preceding claims, **characterized in that** the steering wheel lock (100) comprises a locking cylinder (109) with an actuator (110) and a slide (119) formed on the slider (103), wherein the actuator (110) is designed to act on the slide (119).

7. Steering wheel lock (100) according to claim 1, **characterized in that** the retaining projection (133) is conical or cylindrical.

8. Steering wheel lock (100) according to any one of the preceding claims, **characterized in that** the release element (117) is substantially complementary to the housing cover (105).

9. Steering wheel lock (100) according to any one of the preceding claims, **characterized in that** the securing element (115) comprises a pin which is designed to be fixable to a mounting of the release element (117).

10. Steering wheel lock (100) according to claim 9, **characterized in that** the attachment is arranged on an inner side of the release element (117).

11. Steering wheel lock (100) according to any one of the preceding claims, **characterized in that** the release element (117) has a groove (403) and the housing cover (105) has a securing pin (401), wherein the recess (403) and the securing pin (401) are adapted to engage with each other upon displacement of the housing cover (105) by relaxation of the elastic element (107).

12. Steering wheel lock (100) according to claim 11, **characterized in that** the recess (403) has a recess pin (601) adapted to cooperate with the securing pin (401) of the housing cover (105).

13. Steering wheel lock (100) according to any one of the preceding claims, **characterized in that** the blocking bolt (101) has an engagement (102) and the slider (103) has a projection (104).

14. Steering wheel lock (100) according to any one of the preceding claims, **characterized in that** the blocking bolt (101) and the slider (103) are formed slidable along a contact surface between the engagement (102) and the projection (104).

15. Steering wheel lock (100) according to any one of the preceding claims, **characterized in that** the steering wheel lock (100) comprises a blocking ring (129) in which the blocking bolt (101) engages in the locking position for blocking a steering shaft.

16. Steering wheel lock (100) according to any one of the preceding claims, **characterized in that** the release element (117) is provided to cover an internal part of the steering wheel lock (100) comprising the elastic element (107).

## Revendications

1. Verrouillage de volant (100) pour verrouiller l'arbre de direction d'un véhicule automobile avec :
un goujon de blocage (101) qui est conçue pour être mobile entre une position de verrouillage dans laquelle le goujon de blocage (101) bloque l'arbre de direction et une position de déverrouillage dans laquelle le goujon de blocage (101) libère l'arbre de direction ;
un coulisseau (103) engageant le goujon de blocage (101) et adapté pour déplacer le goujon de blocage (101) entre la position déverrouillée et la position verrouillée ;
un élément de verrouillage (111) qui peut être transféré d'une position de retenue à une position de blocage afin de maintenir le goujon de blocage (101) en position de blocage dans la position de verrouillage ;
un élément de sûreté (115) pour maintenir l'élément de verrouillage (111) en position de retenue ;
un couvercle de carter (105) ;
et un élément élastique (107), en particulier un élément à ressort, qui est disposé entre le coulisseau (103) et le couvercle du carter;
dans lequel un élément de déclenchement (117) est disposé entre le couvercle du boîtier (105) et l'élément élastique (107),
qui s'engage avec l'élément de sûreté (115),
**caractérisé en ce que**
l'élément de déclenchement (117) est conçu comme un support en tôle
et est destiné à couvrir une partie interne du verrouillage de volant (100),
et que l'élément de déclechement (117) comporte une saillie de retenue (133) pour la fixation de l'élément élastique (107).

2. Verrouillage de volant (100) selon la revendication 1, **caractérisé en ce que** l' élément de sûreté (115) est conçu pour être mobile lorsque le couvercle du carter (105) est au moins partiellement retiré par relaxation de l'élément élastique (107), libérant ainsi l'élément de verrouillage (111).

3. Verrouillage de volant (100) selon la revendication 1 ou 2, **caractérisé en ce que** le goujon de blocage (101) présente un évidement de verrouillage (131) et l'élément de verrouillage (111) est adapté pour s'engager dans l'évidement de verrouillage (131) dans la position de verrouillage.

4. Verrouillage de volant (100) selon l'une quelconque des revendications précédentes, **caractérisé en ce que** l'évidement de verrouillage (131) du goujon de blocage (101) est formé en forme de gradin.

5. Verrouillage de volant (100) selon l'une quelconque des revendications précédentes, **caractérisé en ce qu'**un deuxième élément élastique (113) est disposé sur l'élément de verrouillage (111).

6. Verrouillage de volant (100) selon l'une quelconque des revendications précédentes, **caractérisé en ce que** le verrouillage de volant(100) comprend un cylindre de serrure (109) avec un actionneur (110) et une coulisse (119) formé sur le coulisseau (103), dans lequel l'actionneur (110) est conçu pour agir sur la coulisse (119).

7. Verrouillage de volant (100) selon la revendication 1, **caractérisé en ce que** la saillie de retenue (133) est conique ou cylindrique.

8. Verrouillage de volant (100) selon l'une quelconque des revendications précédentes, **caractérisé en ce que** l'élément de déclenchement (117) est sensiblement complémentaire du couvercle du carter (105).

9. Verrouillage de volant (100) selon l'une quelconque des revendications précédentes, **caractérisé en ce que** l'élément de sûreté (115) comprend une broche qui est conçue pour pouvoir être fixée à un montage de l'élément de déclenchement (117).

10. Verrouillage de volant (100) selon la revendication 9, **caractérisé en ce que** la fixation est disposée sur un côté intérieur de l'élément de déclenchement (117).

11. Verrouillage de volant (100) selon l'une quelconque des revendications précédentes, **caractérisé en ce que** l'élément de déclenchement (117) présente un évidement (403) et le couvercle du carter (105) une goupille de sécurité (401), l'évidement (403) et la goupille de sécurité (401) étant adaptés pour s'engager l'un dans l'autre lors du déplacement du couvercle du carter (105) par relaxation de l'élément élastique (107).

12. Verrouillage de volant (100) selon la revendication 11, **caractérisé en ce que** l'évidement (403) comporte une goupille d'évidement (601) adaptée pour coopérer avec la goupille de sécurité (401) du couvercle de carter (105).

13. Verrouillage de volant (100) selon l'une quelconque des revendications précédentes, **caractérisé en ce que** le goujon de blocage (101) a un engagement (102) et le coulisseau (103) a une saillie (104).

14. Verrouillage de volant (100) selon l'une quelconque des revendications précédentes, **caractérisé en ce que** le goujon de blocage (101) et le coulisseau (103) sont formés de manière à pouvoir coulisser le long d'une surface de contact entre l'engagement (102) et la saillie (104).

15. Verrouillage de volant (100) selon l'une quelconque des revendications précédentes, **caractérisé en ce que** le verrouillage de volant (100) comprend une bague de blocage (129) dans laquelle le goujon de blocage (101) s'engage dans la position de verrouillage pour bloquer un arbre de direction.

16. Verrouillage de volant (100) selon l'une quelconque des revendications précédentes, **caractérisé en ce que** l'élément de déclenchement (117) est prévu pour couvrir une partie intérieure du verrouillage de volant (100) comprenant l'élément élastique (107).
